# EUROPEAN PATENT SPECIFICATION

(11) **EP 1 353 762 B1**
(45) Date of publication and mention of the grant of the patent: **26.07.2006**
(21) Application number: 01998409.5
(22) Date of filing: 29.11.2001
(51) Int. Cl.: B05D 1/34

(54) **PROCESS FOR VARIABLE APPLICATIONS OF COATING COMPOSITIONS WITH A THREE OR MORE PLURAL COMPONENT APPARATUS**
VERFAHREN FÜR VARIABELE AUFTRAGUNGEN VON BESCHICHTUNGSZUSAMMENSETZUNGEN MIT EINER MEHRKOMPONENTENVORRICHTUNG MIT DREI ODER MEHR KOMPONENTEN
PROCEDE DESTINE A DIFFERENTES APPLICATIONS DE COMPOSITIONS DE REVETEMENT AU MOYEN D'UN APPAREIL A AU MOINS TROIS COMPOSANTS

(30) Priority: 29.11.2000 US 250199 P
(43) Date of publication of application: 22.10.2003
(73) Proprietor: Akzo Nobel Coatings International B.V., 6824 BM Arnhem (NL)
(72) Inventor: FORBES, Derek, Buford, Georgia 30519 (US); ASHMAN, Eric, Lithonia, GA 30058 (US); VAN ENGELEN, Antonius, 2211 TV Noordwijkerhout (NL)
(74) Representative: Schalkwijk, Pieter Cornelis
(86) International application number: PCT/US2001/044774
(87) International publication number: WO 2002/043880

(56) References cited:
- WO-A-93/08929
- WO-A-99/67027

## Description

### FIELD OF THE INVENTION

The present invention relates to a process for dynamic plural component mixing and more particularly to a dynamic process for mixing components for immediate application to finish a substrate which provides the necessary versatility for different applications without needing to exchange the individual components.

### BACKGROUND OF THE INVENTION

In the automotive industry, the application of a coating material to a substrate as a finish is typically the product of mixing multiple components. Generally in a two component system, the first component will be a binder and the second component will be a hardener, able to react with the binder to form a finish on the substrate. The proper mixing ratios of the components are determined by the requirements of the finished product on the substrate. More specifically the drying time and the properties of the finish obtained can be determined by the reactivity of the binder with the hardener. Presently, this mixing is generally done by hand which gives rise to errors in the mixing ratios and in variable degrees of uniform mixing.

One problem faced with respect to the application of a coating material to a substrate in the automotive industry is the varying needs for each application. For example, when applying a coating material to an entire vehicle, a high quality finish is required, which normally also necessitates a longer cure time. Meanwhile if only a discreet part is to be coated such as a side panel or bumper, such a high quality finish is not always of paramount importance, and a shorter cure time to minimize the time required for the job is optimal.

Variable cure times are obtained in practice by using multiple binder, hardener and/or reducer combinations. Each combination has to be individually mixed which gives rise to high amounts of material loss and is time-consuming.

Furthermore, the two component apparatus available in the industry today restricts the user to only one combination and only one application job.

Even in a three or more component system where the components are three different components, such as a binder, a hardener and a reducer, there is no ability to vary the reactivity of the components depending on the needs of the job. Therefore, the limitation still exists with respect to only having the ability to perform one type of application with one set of the components. More particularly, the plural component spray apparatus that are presently available have not been generally utilized in the automotive refinish industry because advantages with respect to material or time saving were minimal and did not equal the big investment that a shop needed to make for such apparatus.

Also, the apparatus and paint products used with the apparatus could not meet the many differing demands of the various repairs.
Although presently, there are apparatus for mixing plural component coating compositions, for example, see US 5,425,968, DE-A-29 14 684, EP-A-0 311 792, EP-A-0 478 944, and GB 1 313 182, each of these apparatus provide only a fixed mixing ratio. If this mixing ratio has to be changed, the apparatus has to be dismantled or mechanically adjusted, which is time-consuming and cannot be repeated exactly. Such limitations of the disclosed apparatus limits their usefulness in the automotive industry to applications where the job to be accomplished remains constant.

There are also apparatus available where the mixing ratio is monitored and/or changed electronically. US 4,019,653 discloses such an apparatus where a control unit receives a preset signal representative of the desired flow ratio, monitors the flow rate signals from the respective lines, calculates the actual ratio, compares it with the desired ratio, and adjusts a controllable valve in one connecting line to affect the flow rate and thereby achieve the desired ratio. However, for a predetermined time after the spray gun trigger is actuated, the flow rate information is disconnected from the control valve because the initial transient flow signals may be erratic, slow, and unreliable.

EP-A-0 300 902 discloses another apparatus comprising a manually controlled pneumatic sprayer operated by a trigger. The compressed air flow rate is varied according to the position of the trigger. The flow rate of the two components is regulated by the signal given by the airflow information.

Also known is an apparatus for applying plural component coating compositions having at least two dosing devices, an air-assisted spray gun, and a controlling device in which different components are mixed and applied to the substrate. See WO 98/41316.

The recent trend for manufacturers is to go from a 2 component to a 3 component apparatus to accommodate the binder, hardener and reducer. Among such three component systems presently available are the ValueMix (U.S. Application filed) and the P-Mixll-3k both from Graco.

The above disclosed apparatus does not have the advantages of the process of the present invention which include the continuously variable mixing ratios available for the many needs of the industry; use of a coating composition with a short pot life; and other advantages that will be understood in the industry. Accordingly, the use of a plural component apparatus together with the process of the present invention make it possible to use plural component coating compositions which have a very short pot life, for example as low as 1 minute or even less. It results also in an exactly reproducible coating composition, a quick change-over to other mixing ratios, lower use of material, less chemical waste, and higher productivity.

When reactive components are used, the characteristics such as pot life and drying time depend on the reactivity of the components. For example, a binder and a hardener may be present in one component and the catalyst in another, when said binder and hardener only interact in the presence of that catalyst.

One particular application for the above-mentioned process of the present invention is in the refinish industry. Conventional refinish methods for applying a coating composition to a substrate have been limited in several significant aspects. Typically, the components of the coating composition are mixed manually. Once mixed, the composition must be used within a certain time span, i.e. during its pot life, which is defined as the time when the mixture is suitable for spraying. More specifically, the pot life is the point at which the operator can perceive a discernible difference in ease of handling due to an increase in the viscosity of the mixed components.

In the automotive industry for such coatings as clearcoats, basecoats, primers, and fillers, the process of the present invention is especially useful for the finishing of large transport vehicles, such as trains, buses, and airplanes. The process is also applicable in the refinish industry, in particular in a body shop, to repair automobiles. Depending on the amount of coating composition necessary for the particular application, the ratios used in the process of the present invention may be scaled up or down.

Additionally, the manual mixing of the components often results in a large amount of waste. It is also impossible to prepare exactly the same coating composition twice. Accordingly, a large amount of coating composition is prepared before spraying to guarantee that there will be enough coating composition to spray the substrate. Thus, a certain amount of coating composition will always be left over after spraying and since the pot life is relatively short for the composition once it is mixed, it cannot be used for any other application. Hence, the remaining coating composition will be thrown away as chemical waste.

In view of the above, there is a need for an improved process for applying a plural component coating composition.

### SUMMARY OF THE INVENTION

The present invention is directed to a process for mixing coating compositions with a three or more plural component apparatus, where numerous coating compositions having different properties can be mixed and applied without changing the components of the plural component apparatus and more particularly to a process for mixing components for immediate application to finish a substrate.

### DETAILED DESCRIPTION OF THE INVENTION

It has now been discovered that by utilizing a process in which you can vary the mixing of the components for applying dedicated coating composition to a substrate, such as by varying the ratios of the components, the many needs of the industry can be met without "breaking down" the plural component apparatus used for the coating compositions and/or switching out the components for the coating compositions.

A process for making and applying a coating composition using a plural component apparatus comprising choosing at least two non-like components for the coating composition from components in the plural component apparatus, the plural component apparatus having at least one binder component, at least one hardener component, and at least one component being a binder or a hardener, such component having a different reactivity from its like component A or B, selecting a mixing ratio for the at least two non-like components of the coating composition and mixing the components of the coating composition while applying it to a substrate, whereby a plurality of coating compositions with varying properties can be made and applied from the components in the plural component apparatus. Such non-like components being for example a binder and a hardener.

Using a known plural component apparatus having the capability of mixing at least three components, flexibility in the coating compositions available can be achieved by varying the mixing ratios of the reactive components of the coating composition. More particularly, utilizing a plural component system having three components, two like components (for example, two hardeners), each having a different reactivity would be utilized along with one shared component (for example, a binder) which would allow for the preparation of various coating compositions.

In the car refinishing industry, for example, versatility can be achieved by varying the ratios of a fast (cure time) hardener for a coating material, with a slow (cure time) hardener for a coating material in proportion to the shared polymeric binder (resin) such that each of the finish products meets the needs of a specific job without having to switch out the hardeners or the binder. The coating requirements obtained are, e.g., fast cure, slower cure, and higher quality finish. The same type of versatility can be achieved having two different polymeric binders (resins) which differ in cure time together with a shared hardener.

In the process of this invention there are at least two like components having the same type of chemical functionality but with a difference in reactivity towards the at least one shared component. Each of the first two components can be combined with the shared component alone giving the biggest difference in performance such as drytime and appearance. Alternatively, multiple combinations of the two like components, mixed in a constant ratio with the shared component will give varying performances depending on the requirements of the user for the specific application. Such performance will be in the range between the single combination of each of the like components with the shared component.

For example, in a three component process, the plural apparatus could have one shared binder and two like hardeners each having a different reactivity... Then if an application required a fast cure time for the coating material, the shared binder component would only be mixed with the highly reactive (fast) hardener (non-like component) and immediately applied to the substrate. (I.e. only two of the three components would be mixed). Then if the next application required a cure rate that was slightly slower than the first application for the coating material, perhaps to improve the quality of the finish, the hardener would be a mixture of the highly reactive hardener component and the less reactive (slow) hardener component along with the binder. If the next application required a slow cure rate for the coating material I, perhaps to optimize the finish of the material, then the binder would only be mixed with the slow hardener. According to the present invention all of the above applications (and many others besides) would be performed using the same initial components that were loaded on the plural component apparatus. Because the process allows for various mixtures of the coating compositions, there is no need to switch out the individual components.

Although the present invention has been illustrated above using a shared binder with two like hardeners it is not limited to such a configuration. For example, the process would also be applicable in a system with a shared hardener and two like binders.

Optimal results are obtained if in the three component process, there is the minimal difference in viscosity necessary to obtain efficient mixing of the components.

Furthermore, the novelty and versatility of the above invention goes further than the three component process generally described above. This process of the present invention also encompasses the use of additional components such as in a four component process. In such a four component process, two like binders could be used with two like hardeners.

Preferably, the volume percentage of the shared component is between 5% and 95%, more preferably between 10% and 90%.

The coating composition for use in the present process may include, but is not limited to, compositions comprising the following combination of functional groups: amine/isocyanate, amine/epoxy/isocyanate, amine/epoxy, hydroxylisocyanate, epoxy/anhydride; mercaptane/isocyanate, mercaptane/epoxy, mercaptane/epoxy/amine, unsaturated groups/mercaptane, hydroxy/isocyanate/amine, anhydride/hydroxy, amine/anhydride, unsaturated groups/amine or blocked amine like aldimine, ketimine or oxazolidine, acetoacetate/amine or blocked amine like aldimine, ketimine or oxazolidine. The catalyzed reaction of such a combination of functional groups can result in crosslinking polymerization reactions that cause curing of the coating material. Such material range from commercially known systems to systems which have been hitherto been considered to act too fast for practical or commercial use.

The present invention is further explained on the basis of the hydroxy isocyanate reaction. However, the invention is not restricted thereto.

The reactivity of like polyisocyanate hardeners which can be changed or modified by changing from a low reactive isocyanate group based polyisocyanate like α,α,α',α'-tetramethyl o-, m-, and p-xylylene diisocyanate (TMXDI) or isophorone diisocyanate (IPDI) to a somewhat more highly reactive polyisocyanate like hexane diisocyanate (HDI) based polyisocyanate or even more highly reactive polyisocyanates like toluene diisocyanate (TDI) and diphenylmethane 4,4'-diisocyanate (MDI) based polyisocyanates. The higher the molecular weight and or functionality of the polyisocyanate the more reactive the system it is used in will be.

With respect to hydroxyfunctional binders, their reactivity can be modified by changing from the use of a secondary hydroxyl group to a primary hydroxyl group, or by increasing the amount of the hydroxyl groups present, thereby increasing the functionality of the binder, or by increasing the molecular weight or the rigidness of the binder (Tg). The hydroxyfunctional binder may be selected from a polyester polyol, polyurethane polyol, or polyacrylate polyol.

A variance in the amount of catalyst in the like components can also change the reactivity of the respective like components. Catalysts in polyurethane resin systems applicable in the present invention include but are not limited to dibutyl tin dilaurate, dimethyl tin dichloride, dioctyl tin dilaurate, and 1,4-diazobicyclo(2.2.2) octane. Reactivity can be easily adjusted to the required level.

The invention can be used to apply crosslinking systems for primer, sealer, surfacer, tiecoat, basecoat, pigmented topcoat or monocoat and clearcoat purposes or combination of the previous.

For example, the present invention can be carried out to apply a clearcoat composition over a basecoat.

The same can be done with a primer-surfacer for sanding purposes and a sealer for wet-on-wet undercoat purposes. A pigmented first component can be combined with a fast drying surfacer hardener to obtain a high build easy to sand coating besides combination with a lower reactive sealer hardener, which gives a better flow and an even and smooth coating enabling topcoating without sanding.

The same can be done with colored primers. While there is a trend in the automobile industry to tint a primer in the direction of the finishing color of the car more and more colored or tinted primer systems are being introduced in the car refinish market. The three component apparatus can be used to go from dark to light shaded undercoat shades.

With a four component system there can be two shared components with different pigments (such as a black binder and a white binder) together with two like hardeners having different reactivities such that these different reactivities is the same with respect to either of the shared binder.

The process of the present invention may be applied to any substrate. The substrate may be, for example, metal, e.g., iron, steel, and aluminum, plastic, wood, glass, synthetic material, paper, leather, or another coating layer. The other coating layer may be applied by carrying out the process of the current invention or it may be applied differently.

Curing of the coating compositions applied by the process of the present invention may be conducted under a variety of conditions known to a person skilled in the art, although curing is preferably carried out under ambient temperature conditions, typically from ambient to about 70°C (60 to 160°F).

The following examples are illustrative and are not meant to limit the invention in any way.

### Examples

All products mentioned in the Examples are commercially available from Akzo Nobel Coatings Inc.

### Example 1 PUR Clearcoat with varying dryspeed.

The following three components were prepared:
Component A (1) consists of 90 volume parts Autoclear® 1, based on an acrylic polyol binder and 10 volume parts Autocryl® Medium Reducer. Autoclear® 1 is based on an acrylic polyol.
Component B (1), the slow hardener consists of 60 volume parts Autocryl® Hardener and 40 parts Autocryl® Medium Reducer. Autocryl® Hardener is a commercial available Isocyanate hardener based on a IPDI and HDI trimer mixture.
Component C (1), the fast hardener consists of 60 volume parts of Autocryl® Rapid Hardener, based on the same Isocyanate mixture but consists a metal catalyst, and 40 parts Autocryl® Medium Reducer
Using the ValueMix plural component apparatus of Graco, the above-mentioned components in various ratios set forth in the table below were mixed and immediately applied to a substrate, without changing the components on the plural apparatus. They gave the following results:

| Vol. mix. Ratio A⁽¹⁾: B⁽¹⁾: C⁽¹⁾ | Speed (drytime at 140°F) (60°C) | Job size |
|---|---|---|
| 4 : 2 : 0 | Standard (35 min. bake) | Full resprays. |
| 4 : 1 : 1 | Medium (30 min. bake) | 3-5 panels |
| 4 : 0 : 2 | Rapid (25-30 min. bake) | panel, spots & small parts |

### Example 2 PUR Clearcoat with Varying Dryspeed for Poor Airflow and for Downdraft Spraybooths.

The following components were prepared:
Component A (2) consists of Autoclear® 1a product which can be used in environments with poor airflow as well as in spraybooths with a high airflow rate (downdraft spraybooth) by switching the mixing ratio.
Component B (2) consists of Autoclear® 1 Rapid based on the same acrylic binder system as Autoclear® 1 however with as major difference a higher catalyst level.
Component C (2), Hardener consists of 50 volume parts of Autocryl® Hardener Rapid and 50 parts Autocryl® Medium Reducer

Using the ValueMix plural component apparatus of Graco the above-mentioned components in various ratios set forth in the table below were mixed and immediately applied to a substrate, without changing the components on the plural apparatus. They gave the following results:
This example shows that the cure speed differences and thus flexibility for the repair process can be obtained by simply changing the mixing ratios of components.

| Vol. mix. Ratio A⁽²⁾: B⁽²⁾: C⁽²⁾ | Speed (drytime at 140°F (60°C), bake/ 70°F (21°C) airdry conditions) | Job size |
|---|---|---|
| 5 : 0 : 2 | Standard (260 min. airdry) | Full respray (poor airflow). |
| 5 : 5 : 4 | Medium (190 min. airdry) | 3-5 panels (poor airflow) |
| 0 : 5 : 2 | Fast (115 min airdry) | panel, spots & small parts (poor airflow). |
| 3 : 0 : 2 | Standard (32 min bake) | Full respray (downdraft booth) |
| 3 : 3 : 4 | Medium (23 min bake) | 2-5 panels (downdraft booth) |
| 0 : 3 : 2 | Fast (12 min bake) | Spots & small parts (downdraft booth) |

### Example 3 PUR Primer for Surfacer and Sealer purposes.

The following three components were prepared:
Component A(3): Colorbuild®
Component B(3), Sanding Hardener consists of 50 volume parts Colorbuild® Surfacer Hardener and 50 volume parts Colorbuild® Surfacer Activator.
Component C(3), Wet-in-wet Hardener consists of 50 volume parts Colorbuild® Sealer Hardener and 30 volume parts Autocryl® Medium Reducer.
Using the ValueMix plural component apparatus of Graco the above-mentioned components in various ratios set forth in the table below were mixed and immediately applied to a substrate, without changing the components on the plural apparatus. They gave the following results:

| Vol. mix. Ratio A⁽³⁾ : B⁽³⁾ : C⁽³⁾ | Drytime (time to sand at 70°F (21°C)) | Flow | Job type |
|---|---|---|---|
| 3 : 2 : 0 | Fast (180 min.) (3 coats) | Moderate | Spot were severe sanding is needed. |
| 8 : 2 : 4 | Medium (210 min.) (2 coats) | Good | Area where light sanding is needed |
| 5 : 0 : 4 | Slow (235 min) (1 coat) | Very good | Area for wet-in wet application. |

### Example 4 PUR Primer with shading and Surfacer - Sealer possibilities.

Component A⁽⁴⁾: Colorbuild® White
Component B⁽⁴⁾: Colorbuild® Black
Component C⁽⁴⁾, Sanding Hardener consists of 50 volume parts Colorbuild® Surfacer Hardener and 50 volume parts Colorbuild® Surfacer Activator.
Component D⁽⁴⁾, Wet-in-wet Hardener consists of 50 volume parts Colorbuild® Sealer Hardener and 30 volume parts Autocryl® Medium Reducer.
Using the ValueMix plural component apparatus of Graco the above-mentioned components in various ratios set forth in the table below were mixed and immediately applied to a substrate, without changing the components on the plural apparatus. They gave the following results:

| Vol. mix. Ratio A⁽⁵⁾; B⁽⁵⁾: C⁽⁵⁾: D⁽⁵⁾ | Drytime (time to sand at 70°F (21°C)) | Color primer | Job type / Car color |
|---|---|---|---|
| 3 : 0 : 2 : 0 | Fast (180 min.) (3 coats) | White | Spot, sanding / Light car colors. |
| 0 : 8 : 2 : 4 | Medium (195 min.) (2coats) | Black | Small area, light sanding, dark car colors. |
| 5 : 5 : 0 : 8 | Slow (260 min.) (1 coat) | Grey | Area, wet-in-wet, medium light colors. |

## Claims

1. A process for making and applying a coating composition using a plural component apparatus comprising:
choosing at least two non-like components for the coating composition from components in the plural component apparatus;
the plural component apparatus having:
A. at least one binder component,
B. at least one hardener component, and
C. at least one component being a binder or a hardener, such component having a different reactivity from its like component A or B;
selecting a mixing ratio for the at least two non-like components of the coating composition; and
mixing the components of the coating composition and applying the coating composition with the plural component apparatus;
whereby a plurality of coating compositions with varying properties can be made and applied from the components in the plural component apparatus.

2. The process of claim 1 further comprising drying the coating composition between 60 degrees F and 160 degrees F (ambient to about 70°C).

3. The process of claim 1 wherein component A is a binder and component B is a hardener with slow reactivity and component C is a hardener with fast reactivity.

4. The process of claim 3 wherein component A is a hydroxyl functional binder and components B and C are isocyanate functional hardeners.

5. The process of claim 4 wherein the mixing ratio is selected such that the volume percentage of component the shared component is in between 5% and 95%.

6. The process of claim 5 wherein the mixing ratio is selected such that the volume percentage of the shared component is in between 10% and 90%.

7. The process of claim 1 wherein said substrate is a vehicle surface panel with said coating composition comprising a primer to be applied as an external coating to said panel, with there being a first component (A) comprising a binder (the shared component), and there being at least one of a second component (B) and third component (C), B comprising a sanding hardener and C comprising a wet-in-wet hardener, the volumetric ratio of A to B+C ranging from 100:80 to 100:60.

8. The process of claim 1 further comprising a component D such that component C is a binder having a different reactivity from its like component A or B and component D is a hardener having a different reactivity from its like component A or B.

## Patentansprüche

1. Verfahren zum Herstellen und Auftragen einer Beschichtungszusammensetzung unter Verwendung einer Mehrkomponenten-Apparatur, umfassend das Auswählen wenigstens zweier ungleicher Komponenten für die Beschichtungszusammensetzung aus Komponenten in der Mehrkomponenten-Apparatur,
wobei die Mehrkomponenten-Apparatur Folgendes aufweist:
A. wenigstens eine Bindemittel-Komponente,
B. wenigstens eine Härtungsmittel-Komponente,
C. wenigstens eine Komponente, die ein Bindemittel oder ein Härtungsmittel ist, wobei eine solche Komponente eine Reaktivität hat, die von derjenigen ihrer jeweils entsprechenden Komponente A oder B verschieden ist,
das Auswählen eines Mischungsverhältnisses für die wenigstens zwei ungleichen Komponenten der Beschichtungszusammensetzung und
das Mischen der Komponenten der Beschichtungszusammensetzung und das Auftragen der Beschichtungszusammensetzung mit der Mehrkomponenten-Apparatur,
wobei eine Mehrzahl von Beschichtungszusammensetzungen mit variierenden Eigenschaften aus den Komponenten in der Mehrkomponenten-Apparatur hergestellt und aufgetragen werden kann.

2. Verfahren gemäß Anspruch 1, das weiterhin das Trocknen der Beschichtungszusammensetzung zwischen 60 °F und 160 °F (Umgebungstemperatur bis etwa 70 °C) umfasst.

3. Verfahren gemäß Anspruch 1, wobei Komponente A ein Bindemittel ist und Komponente B ein Härtungsmittel ist, das langsam reagiert, und Komponente C ein Härtungsmittel ist, das schnell reagiert.

4. Verfahren gemäß Anspruch 3, wobei die Komponente A ein hydroxylfunktionelles Bindemittel ist und die Komponenten B und C isocyanatfunktionelle Härtungsmittel sind.

5. Verfahren gemäß Anspruch 4, wobei das Mischungsverhältnis derartig ausgewählt ist, dass der Volumen-Prozentgehalt der gemeinschaftlichen Komponente zwischen 5 % und 95 % liegt.

6. Verfahren gemäß Anspruch 5, wobei das Mischungsverhältnis derartig ausgewählt ist, dass der Volumen-Prozentgehalt der gemeinschaftlichen Komponente zwischen 10 % und 90 % liegt.

7. Verfahren gemäß Anspruch 1, wobei das Substrat ein Fahrzeug-Oberflächenblech ist, die Beschichtungszusammensetzung einen Primer umfasst, der als eine Außenschicht auf das Blech aufgetragen werden soll, wobei eine erste Komponente (A) vorliegt, die ein Bindemittel (die gemeinschaftliche Komponente) umfasst, und wenigstens eine zweite Komponente (B) oder eine dritte Komponente (C) vorliegt, wobei B ein schleifendes Härtungsmittel umfasst und C ein Nass-in-Nass-Härtungsmittel umfasst, wobei das Volumenverhältnis von A zu B+C im Bereich von 100:80 bis 100:60 liegt.

8. Verfahren gemäß Anspruch 1, das weiterhin eine Komponente D umfasst, und zwar dergestalt, dass die Komponente C ein Bindemittel ist, das eine Reaktivität aufweist, die von derjenigen ihrer jeweils entsprechenden Komponente A oder B verschieden ist, und Komponente D ein Härtungsmittel mit einer Reaktivität ist, die von derjenigen ihrer jeweils entsprechenden Komponente A oder B verschieden ist.

## Revendications

1. Procédé pour préparer et appliquer une composition de revêtement utilisant un dispositif à plusieurs composants, consistant à :
- choisir au moins deux composants non similaires pour la composition de revêtement parmi les composants du dispositif à plusieurs composants ;
le dispositif à plusieurs composants ayant :
A. au moins un composant liant,
B. au moins un composant durcisseur, et
C. au moins un composant qui est un liant ou un durcisseur, ce composant ayant une réactivité différente de son composant A ou B similaire ;
- sélectionner un rapport de mélange pour les au moins deux composants non similaires de la composition de revêtement ; et
- mélanger les composants de la composition de revêtement et appliquer la composition de revêtement avec le dispositif à plusieurs composants ;
en conséquence de quoi on peut, à partir des composants dans le dispositif à plusieurs composants, préparer et appliquer une pluralité de compositions de revêtement ayant diverses propriétés.

2. Procédé selon la revendication 1, comprenant en outre le séchage de la composition de revêtement entre la température ambiante et environ 70°C (entre 60°F et 160°F).

3. Procédé selon la revendication 1, dans lequel le composant A est un liant et le composant B est un durcisseur ayant une faible réactivité et le composant C est un durcisseur ayant une réactivité rapide.

4. Procédé selon la revendication 3, dans lequel le composant A est un liant à fonctionnalité hydroxyle et les composants B et C sont des durcisseurs à fonctionnalité isocyanate.

5. Procédé selon la revendication 4, dans lequel le rapport de mélange est choisi de façon que le pourcentage, en volume de composant, du composant partagé soit compris entre 5 % et 95 %.

6. Procédé selon la revendication 5, dans lequel le rapport de mélange est choisi de façon que le pourcentage en volume du composant partagé soit compris entre 10 % et 90 %.

7. Procédé selon la revendication 1, dans lequel ledit substrat est un panneau de surface de véhicule, ladite composition de revêtement comprenant un apprêt devant être appliqué à titre de revêtement externe sur ledit panneau, où il y a un premier composant (A) comprenant un liant (le composant partagé), et il y a au moins l'un parmi un deuxième composant (B) et un troisième composant (C), B comprenant un durcisseur de ponçage et C comprenant un durcisseur à l'état humide, le rapport volumétrique de A à B+C étant situé dans la plage allant de 100/80 à 100/60.

8. Procédé selon la revendication 1, comprenant en outre un composant D, le composant C étant un liant ayant une réactivité différente de son composant A ou B similaire et le composant D étant un durcisseur ayant une réactivité différente de son composant A ou B similaire.
